# FASCICULE DE BREVET EUROPEEN

(11) **EP 4 011 672 B1**
(45) Date de publication et mention de la délivrance du brevet: **23.04.2025**
(21) Numéro de dépôt: 21212855.7
(22) Date de dépôt: 07.12.2021
(51) Int. Cl.: B60K 6/48, F02D 41/00, F02D 41/14, F02D 13/02

(54) **PROCÉDÉ DE COMPENSATION D'ÉCART DE COUPLE MOTEUR DÛ À UN CHANGEMENT DE LEVÉE DES SOUPAPES**
VERFAHREN ZUM AUSGLEICH VON MOTORDREHMOMENTABWEICHUNGEN AUFGRUND EINER ÄNDERUNG DES VENTILHUBS
METHOD OF COMPENSATING FOR DEVIATION IN ENGINE TORQUE CAUSED BY A CHANGE IN VALVE LIFT

(30) Priorité: 14.12.2020 FR 2013128
(43) Date de publication de la demande: 15.06.2022
(73) Titulaire: NEW H POWERTRAIN HOLDING, S.L.U., 47008 Valladolid (ES)
(72) Inventeur: GUEROUT, Romain, 94350 VILLIERS SUR MARNE (FR); PEREIRA, Luc, 18320 Cours Des Barres (FR); NERRIERE, Aurelien, 91580 ETRECY (FR)
(74) Mandataire: Renault Group

(56) Documents cités:
- DE-A1- 102008 064 538
- DE-B4- 102016 117 556
- US-A1- 2018 171 882

## Description

### Domaine technique

L'invention concerne, de manière générale, les systèmes de distribution à étalement angulaire variable (« variable valve lift » ou « VVL » en termes anglo-saxons) pour moteurs thermiques à allumage commandé de véhicule automobile hybride.

L'invention concerne en particulier les systèmes de distribution à étalement angulaire variable de type discontinu comportant plusieurs lois de levées distinctes des soupapes d'admission du moteur et pour lesquels il est intéressant de compenser l'écart de couple engendré par un changement discontinu de loi de levée.

### Techniques antérieures

Dans le domaine des lois de levée de soupape, il existe des systèmes permettant de faire varier la loi de levée de soupape. Il existe notamment des systèmes aptes à faire varier la hauteur de levée ainsi que le phasage d'une soupape d'admission. Ces systèmes peuvent par exemple être hydrauliques ou électriques.

Ces systèmes de distribution variable permettent, dans un moteur, d'obtenir des couples et puissances différents selon la loi de levée des soupapes utilisée.

Par exemple, un système peut mettre en œuvre deux lois de levée des soupapes. La première loi de levée peut être typée « performance » en favorisant l'admission d'une quantité importante d'air dans les cylindres. Si le conducteur souhaite un couple très différent du couple courant, cette loi de levée des soupapes permet d'atteindre le couple souhaité en remplissant les cylindres avec une quantité d'air accrue et ce, avec une vitesse de remplissage accrue par apport à un remplissage obtenu en activant la vanne d'admission d'air du moteur pour laisser entrer plus d'air. La seconde loi peut être typée « consommation ». A l'inverse, cette loi est utilisée pour des changements de couple plus faibles, par exemple pour une vitesse du véhicule constante. Ceci permet de réduire la fermeture de la vanne d'admission d'air afin de doser plus facilement le débit d'air nécessaire à la production du couple, ce qui permet de réduire les pertes par pompage du moteur, et ainsi de réduire la consommation du véhicule.

Cependant, lors d'un passage d'une loi de levée des soupapes à une autre, le changement est quasiment immédiat. Il s'effectue tour à tour dans chaque cylindre du moteur et apparait d'un point mort haut d'un piston de cylindre au point mort haut suivant. La modification rapide du débit d'air entrant engendre alors une évolution brutale du couple moteur produit, ce qui provoque un à-coup ressenti par les passagers.

Le changement de loi de levée des soupapes s'effectue trop rapidement pour que les autres actionneurs de type vanne d'admission, turbocompresseur ou décaleur d'arbre à cames puissent compenser la différence de débit d'air, ces actionneurs ne pouvant changer de position qu'en une seconde environ tandis que la période entre deux points morts haut est d'une dizaine de millisecondes.

Il existe des procédés consistant à modifier le réglage de la valeur de l'avance à l'allumage pour dégrader le rendement de combustion du moteur lorsque le débit d'air augmente brutalement. Ce réglage, simple à effectuer, permet de lisser le saut de couple avec la dégradation du rendement. Cependant, cette méthode provoque une surconsommation de carburant et est difficilement applicable lors d'une diminution brutale du débit d'air. En effet, l'avance à l'allumage étant généralement optimisée sur chaque point de fonctionnement du moteur, il n'est pas forcément possible d'augmenter davantage l'avance à l'allumage en vue d'augmenter le rendement de combustion et donc le couple.

DE 10 2016 117556 B4 décrit une procédé de compensation d'écart de couple moteur dû à un changement de loi de levée des soupapes. Le document ne décrit pas un système de distribution à étalement angulaire variable discontinu ou un "activation d'autres actionneurs influant sur le débit d'air du moteur thermique de sorte que le débit d'air initial dans le moteur thermique est sensiblement retrouvé lorsque les actionneurs ont terminé de changer de position, l'étape de compensation de l'écart de couple étant menée en parallèle de l'étape d'activation d'autres actionneurs."

### Exposé de l'invention

La présente invention a donc pour but de pallier les inconvénients précités et de faciliter une transition sans à-coup entre deux lois de levée de soupapes pour un véhicule hybride.

La présente invention a pour objet un procédé de compensation d'écart de couple moteur dû à un changement de loi de levée des soupapes et de débit d'air dans un moteur thermique d'un véhicule hybride comprenant un moteur électrique apte à fonctionner en mode générateur et alternateur, ledit véhicule étant équipé d'un système de distribution à étalement angulaire variable discontinu apte à modifier la loi de levée des soupapes du moteur thermique, et comportant les étapes suivantes :
- Identification d'un souhait de changement de couple de la part du conducteur ;
- Détermination de l'écart de couple entre le couple du moteur thermique avant et après le changement de couple ;
- Compensation de l'écart de couple du moteur thermique en modifiant le couple produit par le moteur électrique de manière à obtenir un couple sensiblement égal au couple avant le changement de couple alors que le débit d'air dans le moteur thermique ne permet pas d'obtenir ce couple sans le moteur électrique.

Ainsi, ce procédé permet de solliciter le moteur électrique temporairement lors d'un changement brutal de débit d'air dans le moteur afin d'éviter un à-coup pour les passagers et de laisser le temps aux autres actionneurs de changer de positions pour rétablir le débit d'air.

En outre, le procédé peut être mis en œuvre avec les composants déjà présents dans le véhicule et de manière autonome.

De plus, l'étape de compensation de l'écart de couple est menée en parallèle d'une étape d'activation des autres actionneurs influant sur le débit d'air du moteur thermique de sorte que le débit d'air initial dans le moteur thermique est sensiblement retrouvé lorsque les actionneurs ont terminé de changer de position.

Avantageusement, les actionneurs du moteur thermique permettent de régler une vanne de réglage du débit d'air du moteur ou la pression en sortie d'un compresseur de turbocompresseur.

Avantageusement, l'étape de compensation de l'écart de couple par le moteur électrique est une étape durant laquelle le couple produit par le moteur électrique diminue au fur et à mesure que la position des actionneurs permet au débit d'air de sensiblement retrouver son débit initial.

Dans un mode de mise en œuvre, le procédé est mis en œuvre dans le cadre d'un changement de loi de levée des soupapes d'admission et/ou d'échappement.

Avantageusement, l'étape de détermination de l'écart de couple entre le couple du moteur thermique avant et après le changement de couple est effectuée à l'aide de mesure des variations instantanées de la vitesse du vilebrequin et à l'aide de cartographie de débit d'air, de débit de carburant et de rendement moteur pour certains points de fonctionnement du moteur thermique.

Avantageusement, l'étape d'identification d'un souhait de changement de couple est effectuée par détection de l'appui du conducteur sur une pédale d'accélération ou de freinage.

Selon un mode de mise en œuvre, l'étape de compensation de l'écart de couple à l'aide du moteur électrique permet de vider ou de recharger la batterie associée au moteur électrique.

Avantageusement, l'étape de compensation de l'écart de couple est effective après une période d'un aller-retour de piston dans un cylindre du moteur après le changement de loi de levée des soupapes.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement différents éléments d'un véhicule automobile mis en œuvre dans un procédé de compensation d'écart de couple moteur dû à un changement de loi de levée des soupapes selon l'invention ;
[Fig 2] illustre les différentes étapes du procédé de compensation d'écart de couple selon l'invention ; et
[Fig 3] illustre l'évolution en fonction du temps des différents paramètres intervenants dans le procédé de compensation d'écart de couple selon l'invention.

### Exposé détaillé d'au moins un mode de réalisation

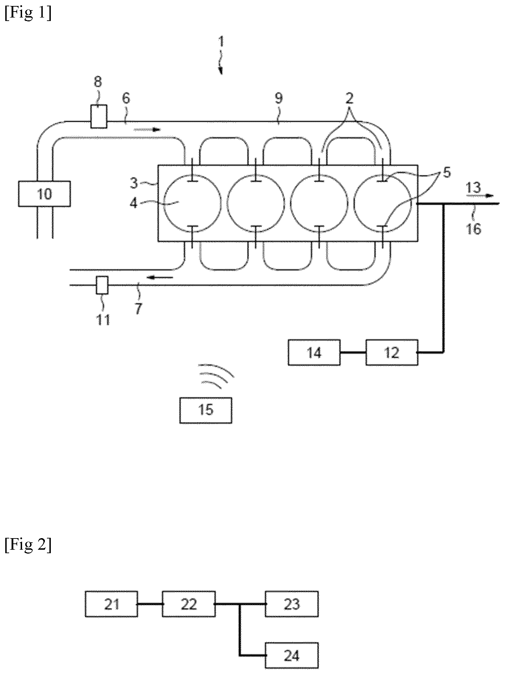

On a représenté sur la figure 1 un schéma simplifié représentant différents éléments d'un dispositif de motorisation 1 d'un véhicule automobile hybride comprenant un système de distribution 2 à étalement variable discontinu capable de modifier la loi de levée des soupapes du moteur thermique 3.

Le dispositif de motorisation comprend un moteur thermique 3, par exemple ici à quatre cylindres 4 en ligne alimentés chacun en carburant par le système de distribution 2, ledit système de distribution 2 comprenant des soupapes 5. Par exemple, il s'agit des soupapes d'admission et d'échappement.

Le moteur thermique 3 est associé à un circuit d'admission d'air 6 et à un circuit d'échappement 7.

Le circuit d'admission 6 comprend, d'amont en aval dans le sens de circulation de l'air, une vanne 8 de réglage du débit d'air et un collecteur d'admission 9. Il peut comprendre d'autres composants non représentés comme par exemple un filtre à air. Optionnellement, le moteur peut être du type à aspiration naturelle ou du type suralimenté par turbocompresseur, auquel cas le circuit d'admission d'air comprend un compresseur 10 de turbocompresseur.

Le circuit d'échappement 7 comprend une sonde à oxygène 11 de type proportionnel, qui peut servir à régler la richesse du mélange air-carburant sur une valeur de consigne, généralement une richesse de 1, en ajustant le débit d'injection du carburant dans les cylindres 4 en fonction du débit d'air.

Le dispositif de motorisation 1 comprend également un moteur électrique 12 pouvant, au même titre que le moteur thermique 3, appliquer un couple d'entrainement aux roues 13 du véhicule en mode moteur ou bien pouvant prélever de la puissance à l'entraînement des roues 13 afin, par exemple, de recharger la batterie 14 qui lui est associée.

Le système de distribution 2 à étalement variable discontinu permet de changer la loi de levée des soupapes 5 lorsque la conduite du conducteur le demande. Par exemple, lorsque le conducteur appui sur une pédale, le calculateur de bord 15 détecte l'appui et commande un changement de loi de levée des soupapes 5 de sorte que les soupapes 5 ont une loi de levée correspondant à la conduite du conducteur.

Le calculateur de bord 15 met en œuvre un procédé de compensation d'écart de couple moteur thermique 3 dû à un changement de loi de levée des soupapes 5 et donc de débit d'air. En effet, le débit d'air dans le moteur thermique 3 peut être régulé grâce à la loi de levée des soupapes 5 ainsi que par la vanne 8 de réglage du débit d'air ou le compresseur 10 du turbocompresseur, qui fait varier la pression de suralimentation pour un moteur suralimenté.

Cependant, lors d'un changement de loi de levée des soupapes 5, par exemple des soupapes d'admission et/ou des soupapes d'échappement, le débit d'air est brutalement modifié dans le moteur thermique 3. La richesse étant régulée en boucle fermée sur une valeur proche de 1, le débit de carburant est modifié de manière à suivre le débit d'air. En conséquence, le couple généré par le moteur thermique 3 subit un changement brutal et génère un à-coup.

Une solution pour pallier ce changement de débit d'air est le réglage du débit d'air via la vanne 8 de réglage du débit d'air ou le compresseur 10 du turbocompresseur. Cependant, ces réglages sont lents à mettre en place, nécessitant par exemple environ une seconde à se positionner correctement, et l'à-coup intervient dans l'intervalle, le changement de loi de levée s'effectuant en quelques millisecondes, le temps que le piston d'un cylindre 4 fasse un aller-retour.

On a représenté figure 2 les différentes étapes d'un procédé de compensation d'écart de couple moteur thermique 3 dû à un changement de loi de levée des soupapes 5 dans le moteur thermique 3, le procédé étant mis en œuvre par le calculateur de bord 15.

En premier lieu, le calculateur de bord 15 identifie dans une première étape 21 le souhait de la part du conducteur de changer de couple, par exemple en détectant un appui du conducteur sur l'une des pédales de frein ou d'accélération.

Dans une seconde étape 22, le calculateur de bord détermine l'écart de couple entre le couple initial avant le changement de couple et le couple après le changement de couple. Cette étape est effectuée à l'aide de mesure des variations instantanées de la vitesse du vilebrequin 16 et à l'aide de cartographies de débit d'air, de débit de carburant et de rendement moteur pour certains points de fonctionnement du moteur thermique 3.

Par exemple, le changement de loi de levée des soupapes 5 induit un écart de débit d'air cartographié qui dépend du rendement moteur à différents points de fonctionnement. Le débit de carburant étant régulé sur celui du débit d'air, on en déduit le couple moteur thermique 3 à l'aide d'une autre cartographie stockée dans le calculateur de bord 15. L'écart de couple peut ainsi être calculé et estimé avant que le nouveau couple soit appliqué au vilebrequin 16, ce qui permet une mise en place rapide de la troisième étape 23 suivante.

Dans cette troisième étape 23, l'écart de couple déterminé est compensé en modifiant le couple produit par le moteur électrique 12 de manière à obtenir un couple total sensiblement égal au couple avant le changement de couple. Le moteur électrique 12 sert ici à compléter le couple en sortie du moteur thermique 3 sur le vilebrequin 16 de sorte que le couple du moteur thermique 3, modifié en raison du changement de loi de levée des soupapes 5, additionné avec le couple en sortie du moteur électrique 12, soit sensiblement le même qu'avant le changement de loi des soupapes. Cela permet de garder un couple constant, alors que le débit d'air dans le moteur thermique 3 ne permet pas d'obtenir ce couple sans le moteur électrique 12.

En particulier, si le changement de loi de levée des soupapes 5 augmente le débit d'air dans le moteur thermique 3, le couple en sortie du moteur thermique 3 augmente. La compensation mise en œuvre par le moteur électrique 12 est réalisée avec un couple de freinage, en sens inverse. Cette action peut par exemple également recharger la batterie du moteur électrique 12 en récupérant la puissance excessive.

A l'inverse, si le changement de loi de levée des soupapes 5 diminue le débit d'air dans le moteur thermique 3, le couple en sortie du moteur thermique 3 diminue. Le moteur électrique 12 compense avec un couple moteur positif, dans le sens de la marche. La batterie 14 du moteur électrique 12 fournit de l'énergie.

L'étape 23 de compensation intervient au maximum un aller-retour de piston de cylindre 4 après le changement de loi de levée des soupapes 5 de ce cylindre 4 de sorte que l'à-coup ne peut pas avoir lieu.

En parallèle de l'étape 23 de compensation de l'écart de couple, une étape 24 d'activation des autres actionneurs 8 et/ou 10 pouvant influer sur le débit d'air du moteur thermique 3 est réalisée en parallèle. En effet, le moteur électrique 12 n'ayant pas vocation à compenser indéfiniment le couple du moteur thermique 3, il est nécessaire de rétablir le débit d'air initial en le régulant grâce aux actionneurs 8 et 10 tel que la vanne 8 de réglage du débit d'air ou le compresseur 10 du turbocompresseur. Le débit d'air initial dans le moteur thermique 3 est sensiblement retrouvé lorsque les actionneurs 8 et 10 ont terminé de changer de position. Durant cette période, le couple délivré par le moteur électrique 12 diminue à mesure que la position des actionneurs 8 et 10 progresse.

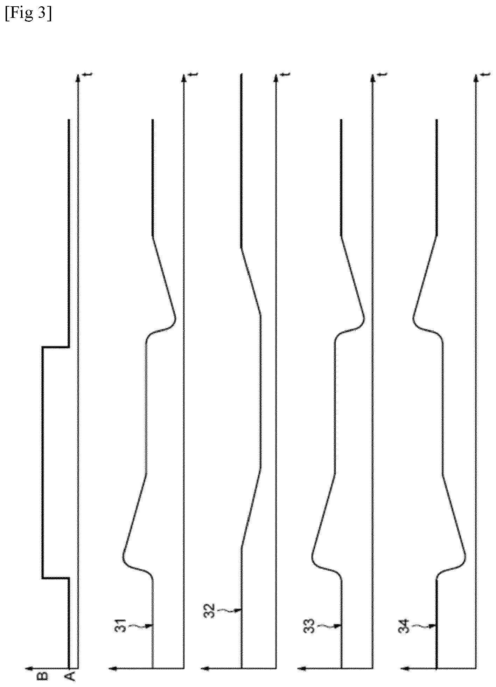

On a représenté figure 3 les différentes évolutions du débit 31 d'air dans le moteur thermique 3, de la position 32 d'un actionneur de type vanne 8 de réglage du débit d'air, du couple 33 du moteur thermique 3 et du couple 34 du moteur électrique 12 en fonction du temps t et lors d'un passage d'une loi A de levée des soupapes 5 à une loi B de levée des soupapes 5, puis d'un passage d'une loi B de levée des soupapes à une loi A de levée des soupapes.

Lors du passage de la loi A à la loi B, qui est du type « performance », le débit 31 d'air du moteur thermique 3 augmente du fait d'une plus grande ouverture angulaire des soupapes 5. En conséquence, le couple 33 du moteur thermique 3 augmente également brutalement. Le procédé détaillé à la figure 2 permet néanmoins de compenser cette augmentation en appliquant à l'aide du moteur électrique 12 un couple 34 inverse. La position 32 de l'actionneur de la vanne 8 de réglage du débit 31 d'air change ensuite afin de rétablir le débit d'air 31 à un niveau sensiblement égal au niveau initial. En conséquence, le couple 33 du moteur thermique 3 diminue et le moteur électrique 12 compense de moins en moins le couple 33 du moteur thermique 3 avec le couple 34 du moteur électrique. Toutes ces étapes s'effectuent en quelques secondes.

Le passage de la loi B à la loi A se déroule de la même manière.

## Revendications

1. Procédé de compensation d'écart de couple moteur dû à un changement de loi de levée des soupapes (5) et de débit (31) d'air dans un moteur thermique (3) d'un véhicule hybride comprenant un moteur électrique (12) apte à fonctionner en mode générateur et alternateur, ledit véhicule étant équipé d'un système de distribution (2) à étalement angulaire variable discontinu apte à modifier la loi de levée des soupapes (5) du moteur thermique (3), **caractérisé en ce qu'**il comporte les étapes suivantes :
- Identification (étape 21) d'un souhait de changement de couple de la part du conducteur ;
- Détermination (étape 22) de l'écart de couple entre le couple du moteur thermique (3) avant et après le changement de couple ;
- Compensation (étape 23) de l'écart de couple du moteur thermique (3) en modifiant le couple produit par le moteur électrique (12) de manière à obtenir un couple sensiblement égal au couple avant le changement de couple alors que le débit (31) d'air dans le moteur thermique (3) ne permet pas d'obtenir ce couple sans le moteur électrique (12).
- Activation (étape 24) d'autres actionneurs (8 ; 10) influant sur le débit (31) d'air du moteur thermique (3) de sorte que le débit d'air initial dans le moteur thermique (3) est sensiblement retrouvé lorsque les actionneurs (8 ; 10) ont terminé de changer de position, l'étape (23) de compensation de l'écart de couple étant menée en parallèle de l'étape (24) d'activation d'autres actionneurs (8 ; 10).

2. Procédé selon la revendication 1, dans lequel les actionneurs du moteur thermique (3) permettent de régler une vanne (8) de réglage du débit d'air du moteur ou la pression en sortie d'un compresseur (10) de turbocompresseur.

3. Procédé selon l'une des revendications 1 et 2, dans lequel l'étape (23) de compensation de l'écart de couple par le moteur électrique (12) est une étape durant laquelle le couple (34) produit par le moteur électrique (12) diminue au fur et à mesure que la position des actionneurs permet au débit (31) d'air de sensiblement retrouver son débit initial.

4. Procédé selon l'une quelconque des revendications 1 à 3, **caractérisé en ce qu'**il est mis en œuvre dans le cadre d'un changement de loi de levée des soupapes (5) d'admission et/ou d'échappement.

5. Procédé selon l'une quelconque des revendications 1 à 4, dans lequel l'étape (22) de détermination de l'écart de couple entre le couple (33) du moteur thermique (3) avant et après le changement de couple est effectuée à l'aide de mesure des variations instantanées de la vitesse du vilebrequin (16) et à l'aide de cartographie de débit d'air, de débit de carburant et de rendement moteur pour certains points de fonctionnement du moteur thermique (3).

6. Procédé selon l'une quelconque des revendications 1 à 5, dans lequel l'étape (21) d'identification d'un souhait de changement de couple est effectuée par détection de l'appui du conducteur sur une pédale d'accélération ou de freinage.

7. Procédé selon l'une quelconque des revendications 1 à 6, dans lequel l'étape (23) de compensation de l'écart de couple à l'aide du moteur électrique (12) permet de vider ou de recharger la batterie (14) associée au moteur électrique (12).

8. Procédé selon l'une quelconque des revendications 1 à 7, dans lequel l'étape (23) de compensation de l'écart de couple est effective après une période d'un aller-retour de piston dans un cylindre (4) du moteur après le changement de loi de levée des soupapes.

## Patentansprüche

1. Verfahren zum Kompensieren einer Abweichung des Sollmotordrehmoments aufgrund einer Änderung des Gesetzes des Ventilhubs (5) und der Luftmenge (31) in einem Verbrennungsmotor (3) eines Hybridfahrzeugs, umfassend einen Elektromotor (12), der in einem Generator- und einem Alternatormodus betrieben werden kann, wobei das Fahrzeug mit einem Abgabesystem (2) mit diskontinuierlicher, variabler Winkelverteilung ausgestattet ist, das das Ventilhubgesetz (5) des Verbrennungsmotors (3) modifizieren kann, **dadurch gekennzeichnet, dass** es die folgenden Schritte aufweist:
- Erkennen (Schritt 21) eines Drehmomentänderungswunsches des Fahrers;
- Bestimmen (Schritt 22) der Drehmomentabweichung zwischen dem Drehmoment des Verbrennungsmotors (3) vor und nach der Drehmomentänderung;
- Kompensieren (Schritt 23) der Drehmomentabweichung des Verbrennungsmotors (3) bei Modifizieren des durch den Elektromotor (12) erzeugten Drehmoments, um ein Drehmoment zu erhalten, das im Wesentlichen gleich dem Drehmoment vor der Drehmomentänderung ist, während die Luftmenge (31) in dem Verbrennungsmotor (3) es nicht zulässt, dass dieses Drehmoment ohne den Elektromotor (12) erhalten wird.
- Ansteuern (Schritt 24) weiterer Aktuatoren (8; 10), die die Luftmenge (31) des Verbrennungsmotors (3) beeinflussen, so dass die anfängliche Luftmenge in dem Verbrennungsmotor (3) im Wesentlichen wiederhergestellt wird, wenn die Aktuatoren (8; 10) die Positionsänderung beendet haben, wobei der Schritt (23) des Kompensierens der Drehmomentabweichung parallel zu dem Schritt (24) des Ansteuerns der weiteren Aktuatoren (8; 10) ausgeführt wird.

2. Verfahren nach Anspruch 1, wobei die Aktuatoren des Verbrennungsmotors (3) es zulassen, ein Ventil (8) zum Einstellen der Luftmenge des Motors oder des Drucks bei dem Auslass eines Verdichters (10) eines Turboverdichters einzustellen.

3. Verfahren nach einem der Ansprüche 1 und 2, wobei der Schritt (23) des Kompensierens der Drehmomentabweichung durch den Elektromotor (12) ein Schritt ist, während dessen das durch den Elektromotor (12) erzeugte Drehmoment (34) nach und nach abnimmt, je mehr die Position der Aktuatoren es ermöglicht, dass die anfängliche Menge der Luftmenge (31) im Wesentlichen wiederhergestellt wird.

4. Verfahren nach einem der Ansprüche 1 bis 3,
**dadurch gekennzeichnet, dass** es im Rahmen einer Änderung des Gesetzes des Einlass- und/oder Auslassventilhubs (5) durchgeführt wird.

5. Verfahren nach einem der Ansprüche 1 bis 4, wobei der Schritt (22) des Bestimmens der Drehmomentabweichung zwischen dem Drehmoment (33) des Verbrennungsmotors (3) vor und nach der Drehmomentänderung mittels einer Messung momentaner Schwankungen der Drehzahl der Kurbelwelle (16) und mittels eines Kennfelds der Luftmenge, des Kraftstoffdurchsatzes und der Motorleistung für gewisse Betriebspunkte des Verbrennungsmotors (3) ausgeführt wird.

6. Verfahren nach einem der Ansprüche 1 bis 5, wobei der Schritt (21) eines Erkennens eines Drehmomentänderungswunsches durch Erfassen des Drucks des Fahrers auf ein Gas- oder ein Bremspedal ausgeführt wird.

7. Verfahren nach einem der Ansprüche 1 bis 6, wobei der Schritt (23) des Kompensierens der Drehmomentabweichung mittels des Elektromotors (12) ein Entladen oder Wiederaufladen der dem Elektromotor (12) zugeordneten Batterie (14) ermöglicht.

8. Verfahren nach einem der Ansprüche 1 bis 7, wobei der Schritt (23) des Kompensierens der Drehmomentabweichung nach einer Zeitspanne von einem Hin- und Herbewegen eines Kolbens in einem Zylinder (4) des Motors nach der Änderung des Ventilhubgesetzes ausgeführt wird.

## Claims

1. Method for compensating for deviation in engine torque due to a change in the valve lift law (5) and air flow rate (31) in a heat engine (3) of a hybrid vehicle, comprising an electric motor (12) suitable for operating in generator and alternator mode, the vehicle being equipped with a distribution system (2) with discontinuous variable angular spread suitable for modifying the valve lift law (5) of the heat engine (3), the method being **characterized in that** it comprises the following steps:
- identifying (step 21) a desire to change torque by the driver;
- determining (step 22) the torque deviation between the torque of the heat engine (3) before and after the torque change;
- compensating (step 23) for the torque deviation of the heat engine (3) by modifying the torque produced by the electric motor (12) so as to obtain a torque substantially equal to the torque before the torque change, whereas the air flow rate (31) in the heat engine (3) does not make it possible to obtain this torque without the electric motor (12).
- activating (step 24) further actuators (8; 10) influencing the air flow rate (31) of the heat engine (3) so that the initial air flow rate in the heat engine (3) is substantially recovered when the actuators (8; 10) have finished changing position, the step (23) of compensating for the torque deviation being carried out in parallel with the step (24) of activating further actuators (8; 10).

2. Method according to claim 1, wherein the actuators of the heat engine (3) make it possible to adjust a valve (8) for adjusting the air flow rate of the engine or the pressure at the outlet of a turbocharger compressor (10).

3. Method according to any of claims 1 and 2, wherein the step (23) of compensating for the torque deviation by the electric motor (12) is a step during which the torque (34) produced by the electric motor (12) decreases as the position of the actuators allows the air flow rate (31) to substantially recover its initial flow rate.

4. Method according to any of claims 1 to 3, **characterized in that** it is implemented as part of a change in the lift law of the intake and/or exhaust valves (5).

5. Method according to any of claims 1 to 4, wherein the step (22) of determining the torque deviation between the torque (33) of the heat engine (3) before and after the torque change is carried out using measurement of the instantaneous variations in the speed of the crankshaft (16) and using mapping of air flow rate, fuel flow rate and engine efficiency for certain operating points of the heat engine (3).

6. Method according to any of claims 1 to 5, wherein the step (21) of identifying a desire to change torque is carried out by detecting the pressure of the driver on an acceleration or braking pedal.

7. Method according to any of claims 1 to 6, wherein the step (23) of compensating for the torque deviation using the electric motor (12) makes it possible to empty or recharge the battery (14) associated with the electric motor (12).

8. Method according to any of claims 1 to 7, wherein the step (23) of compensating for the torque deviation is effective after a period of a piston to- and-fro movement in a cylinder (4) of the engine after the change in valve lift law.
